# EUROPEAN PATENT SPECIFICATION

(11) **EP 2 425 508 B1**
(45) Date of publication and mention of the grant of the patent: **13.07.2016**
(21) Application number: 09779378.0
(22) Date of filing: 29.04.2009
(51) Int. Cl.: H02B 1/21

(54) **A CONNECTION ASSEMBLY AND A BUS BAR CONNECTION**
VERBINDUNGSANORDNUNG UND STROMSCHIENEN-VERBINDUNG
ENSEMBLE DE RACCORDEMENT ET CONNEXION D'UNE BARRE OMNIBUS

(43) Date of publication of application: 07.03.2012
(73) Proprietor: ABB AB, 721 83 Västerås (SE)
(72) Inventor: LARSSON, Bertil, S-441 92 Alingsås (SE); NORD, Viktoria, S-515 70 Rydboholm (SE); SUNDMAN, Petter, S-443 30 Lerum (SE); EKMAN, Kristoffer, 44146 Alingsås (SE); SÄÄW, Olle, S-466 31 Sollebrunn (SE)
(74) Representative: Savela, Reino Aleksi
(86) International application number: PCT/EP2009/055181
(87) International publication number: WO 2010/124728

(56) References cited:
- EP-A1- 0 040 180
- EP-A1- 0 681 356
- EP-A1- 0 713 018
- DE-A1- 3 537 135
- GB-A- 1 484 192

## Description

### FIELD OF THE INVENTION AND BACKGROUND ART

The present invention relates to a connection assembly according to the preamble of claim 1 and a bus bar connection according to the preamble of claim 9.

A bus bar in the field of electrical power distribution refers to strips of copper or aluminium that conduct electricity within switchboards, distribution boards, substations, or other electrical apparatuses. Bus bars may be connected to each other and/or to electrical apparatuses by bolted or clamped connections. An electrical apparatus is usually connected to a bus bar for several years and the electrical connection between the electrical apparatus and the bus bar has to be very good over the years of use. Therefore, it is of great importance that the assemblies for connecting the electrical apparatus to the bus bar are reliable over time, which also means that said connecting assemblies have to be correctly installed during mounting of the electrical apparatus to the bus bar.

A common feature of a bus bar is that it is provided with a T-shaped groove with an outwardly facing slot on the side of the bus bar to which an electrical apparatus is to be mounted. The groove has an inner width which is larger than the width of the slot. The electrical apparatus is usually mounted to the bus bar by means of a connection assembly. Such a connection assembly is configured to fit into the groove of the bus bar, which implies that it usually has at least one member which is T-shaped to fit into the T-shaped groove.

In GB 1484192 it is disclosed a connection assembly comprising a T-shaped bolt with an elongated head and a nut for connecting electrical apparatuses to bus bars. The T-shaped bolt is configured to be inserted into the groove of a bus bar when the long sides of the head of the bolt are parallel to the groove. The bolt is thereafter turned so as to lock the head in the T-shaped groove, Thereafter, an electrical apparatus is fastened to the bolt with the nut, and the connection assembly is tightened so as to push the electrical apparatus towards the bus bar.

DE 35 37 135 A1 discloses a connection assembly for attaching a device to a rail through a bolt and nut, further comprising frictional means.

### SUMMARY OF THE INVENTION

The object of the present invention is to provide a new connection assembly for attaching an electrical apparatus to a bus bar.

This object is according to the invention obtained by providing a connection assembly having the features defined in claim 1.

The frictional means can of course be any frictional means providing increased friction between the thread of the bolt and the thread of the nut, for instance a spring, a plastic bushing, intentionally created defects in the thread of the bolt and/or the nut etc.

The connection assembly defined above can be used for mounting an electrical apparatus to a bus bar, wherein the bus bar typically has a longitudinal groove with a slot configured for receiving the bolt of the connection assembly, the slot having a smaller width than the inner width of the groove. The connection assembly is connected to the bus bar by insertion of the head of the bolt into the groove of the bus bar through the slot which provides an entrance to the groove. The nut is thereafter turned in a rotational direction which normally screws the nut onto the bolt (typically clock-wise), but since the head of the bolt is allowed to rotate essentially freely in the groove, i.e. not hindered by walls in the groove, the frictional means provides enough friction between the bolt and the nut for the bolt to rotate with the nut. Thus, the bolt is rotated with the nut until parts of the short sides of the head come into engagement with opposite walls in the groove. When the turning of the nut is continued in the same direction the nut is screwed onto the bolt and the surface of the head of the bolt facing the nut is pressed towards flanges defining the slot of the groove of the bus bar. The electrical apparatus to be mounted is thereby pressed towards the bus bar. The connection assembly is tightened until the connection assembly is secured to the bus bar with a predefined torque, e.g. 15 Nm. In the prior art, as described in for instance GB 1484192, the head of the bolt needs to be turned into place in the groove of the bus bar before the nut is screwed onto the bolt. By using the connection assembly according to the present invention the turning of the head of the bolt into its place and the tightening of the connection assembly is performed by the same manoeuvre, i.e. turning of the nut in one and the same rotational direction.

According to an embodiment of the invention the frictional means comprises a spring, at one end abutting against the nut on the side of the nut facing the head of the bolt, and at the other end abutting against the head of the bolt on the side of the head facing the nut, which spring is a pressure spring configured to press the nut and the bolt in opposite directions so as to create friction between the thread of the nut and the thread of the bolt. The pressure provided by the pressure spring gives rise to a very homogenous friction between the thread of the nut and the thread of the bolt, i.e. the friction is not significantly changed over time and after use which can be the case with other types of frictional means.

According to another embodiment of the invention the frictional means comprises a plastic bushing between the nut and the bolt, which plastic bushing is configured to engage with the thread of the nut and/or the thread of the bolt so as to create friction between them. By using a plastic bushing the frictional means can be provided in a cost effective way.

After or during the mounting of the connection assembly to a bus bar, the turning of the head of the bolt can be controlled by inspecting the position of the indicator mark. If the head for some reason is not completely turned, the surface of the head facing the nut can be pressed towards the lips obliquely during tightening, which after some time may result in loss in the torque applied during the mounting of the connection assembly. It is very important that the applied torque is preserved during the life-time of the connection assembly; otherwise the electrical connection between the bus bar and the electrical apparatus mounted to the bus bar can fail or deteriorate.

According to another embodiment of the invention the indicator mark is a notch. If a visual inspection of the indicator mark shows that the bolt not has been correctly turned in position, a screw driver, preferably an insulated screw driver, can be inserted into the through hole of the nut and engage with the notch, whereupon the bolt can be turned into correct position by means of the screw driver.

According to another embodiment of the invention the nut is a socket head nut provided with a socket hole, which together with the threaded hole of the nut forms said through hole. A socket head nut can be turned even if the nut is closely surrounded by objects. An ordinary hexagonal nut has to be grasped from its periphery by a wrench or a similar tool, which means that there must be enough space in the proximity to the nut to allow a wrench to grasp the nut. This is not the case if the nut is a socket head nut. The through hole allows for visual inspection of the turned position of the bolt as discussed above. The protrusions also improve the electrical connection between the bus bar and the electrical apparatus, by engaging the lips from the inside of the groove.

According to another embodiment of the invention the head of the bolt on the surface facing the nut, along the short sides of the head, has protrusions for providing friction between the head of the bolt and the inside of the groove in a bus bar when the connection assembly is in use. The protrusions can ensure that the connection assembly does not slide in the bus bar by having its edges engaging with the inside of the groove when the connection assembly is in use.

Other advantages and advantageous features of the invention will appear from the dependent claims and the subsequent description.

### BRIEF DESCRIPTION OF THE DRAWINGS

With reference to the appended drawings, below follows a specific description of embodiments of the invention cited as examples.

In the drawings:
- Fig 1: shows a fuse box attached to bus bars,
- Fig 2a: shows in a perspective view a connection assembly according to an embodiment of the invention,
- Fig 2b: shows in an exploded view a connection assembly according to another embodiment of the invention,
- Fig 3: shows in a top view a bolt of a connection assembly according to the invention,
- Fig 4: shows in a cross-sectional view a nut of a connection assembly according to the invention,
- Fig 5: shows in perspective and partial sectional view a connection assembly according to the invention connecting an electrical apparatus to a bus bar, and
- Figs 6a-d: show in cross-section how a connection assembly according to the invention is used for connecting an electrical apparatus to a bus bar.

### DETAILED DESCRIPTION OF EMBODIMENTS OF THE INVENTION

Explained herein are connection assemblies according to embodiments of the invention. The invention may, however, be embodied in many different forms and should not be construed as being limited to the exemplary embodiments set forth herein; rather, these embodiments are provided so that this disclosure will be thorough and complete, and will fully convey the concept of the invention to those skilled in the art.

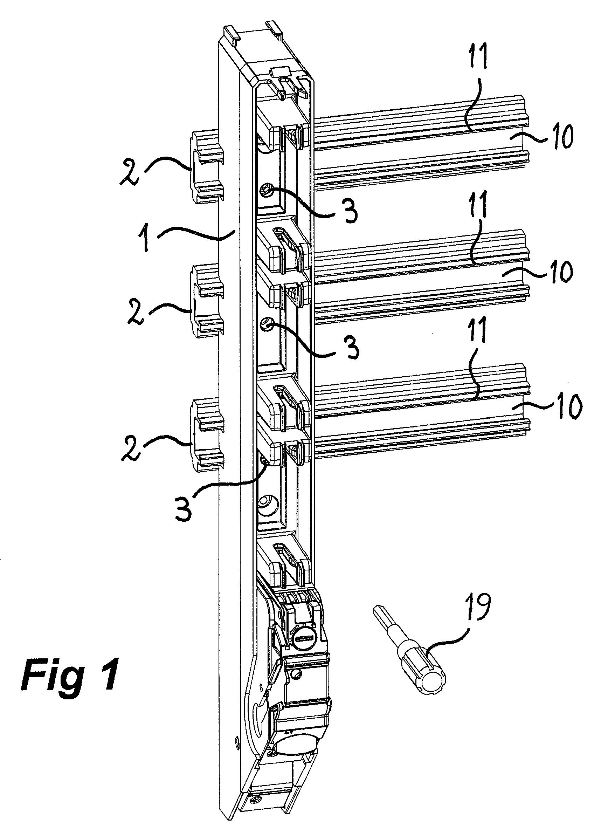

In Fig 1 it is shown an electrical apparatus 1 in the form of a fuse box attached to bus bars 2 with grooves 10 accessible via slots 11. The electrical apparatus 1 is connected to a bus bar 2 by means of a connection assembly according to the invention (which not can be seen in Fig 1) inserted in the groove 10 through the slot 11 and said connection assembly can be accessed for instance through a connecting hole 3 in the electrical apparatus by a tool 19.

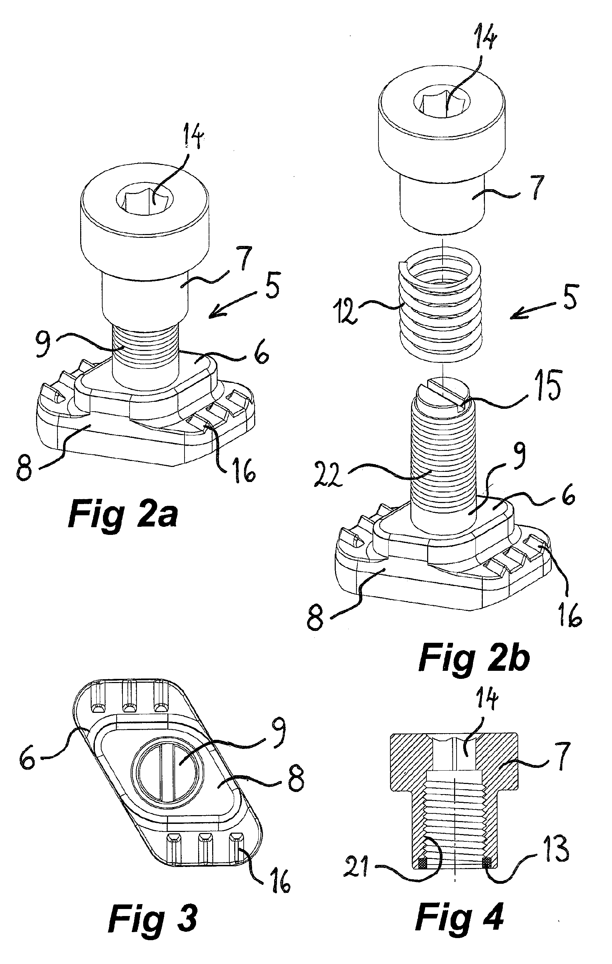

In Figs 2a-b it is shown a connection assembly 5 according to two different embodiments of the invention. The connection assembly 5 comprises a bolt 6, which also is shown in Fig 3 in a top-view of one embodiment of said bolt, and a nut 7, which also is shown in Fig 4 in a cross-sectional view of one embodiment of the nut 7. The bolt 6 has a head 8 and a shaft 9, which shaft 9 is provided with an external thread 22 and configured to be screwed into the nut 7. The shaft 9 extends essentially from the centre of the head 8 of the bolt 6. The head 8, as seen in a plane perpendicular to the longitudinal axis of the shaft 9, has an elongated shape so as to allow the head 8 to be introduced into the groove 10 of the bus bar through the slot 11. The width of the head 8 is smaller than the width of the slot 11 and the length of the head 8 is larger than the width of the slot 11. The nut 7 is provided with an internal thread 21 configured to be in engagement with the external thread 22 of the shaft 9 of the bolt 6. Frictional means is provided between the bolt 6 and the nut 7. The frictional means can of course be any frictional means providing increased friction between the shaft 9 of the bolt 6 and the nut 7, for instance a spring, a plastic bushing, intentionally created defects in the thread of the bolt and/or the nut etc.

In Fig 2b it is shown frictional means comprising a spring 12, which at one end is to abut against the nut 7 on the side of the nut facing the head 8 of the bolt 6, and at the other end is to abut against the head 8 of the bolt 6 on the side of the head 8 facing the nut 7. The spring 12 is a pressure spring configured to press the nut 7 and the bolt 6 in opposite directions so as to create friction between the thread of the nut 7 and the thread of the bolt 6. As shown in Fig 4 the frictional means can alternatively comprise a plastic bushing 13 attached to the nut 7, which plastic bushing 13 is configured to engage with the thread of the bolt 6 so as to create friction between the nut 7 and the thread of the bolt 6. Of course a plastic bushing can be attached to the bolt instead and configured to engage with the thread of the nut 7 so as to create friction between the thread of the nut 7 and the bolt 6.

The nut 7 has a through hole 14 and the bolt 6 has an indicator mark 15 on the surface of the free end of the shaft 9. The indicator mark can of course be any suitable mark but in Fig 2b and Fig 3 the indicator mark 15 constitutes a notch. The indicator mark 15 indicates the turning position of the bolt 6, and is visible through said through hole 14 of the nut 7 when the thread of the nut 7 is in engagement with the thread 22 of the shaft 9 of the bolt 6. The through hole 14 of the nut 7 extends in the axial direction of the nut 7 and the thread 21 of the nut 7 is formed in this through hole 14. The nut 7 can be a socket head nut wherein the socket hole together with the threaded hole of the nut forms the through hole 14 of the nut 7. If the indicator mark 15 constitutes a notch a screw driver can be engaged in the notch for turning the bolt 6 if the bolt 6 for some reason is not turned correctly into its position.

The head 8 of the bolt 6 can have protrusions 16 on the surface facing the nut 7, along the short sides of the head 8, for providing friction between the head 8 of the bolt 6 and the inside of the groove 10 in a bus bar 2 when the connection assembly 5 is in use. The protrusions can be of any shape, for instance conical or pyramidal. In Figs 2a-b and Fig 3 the protrusions are embodied with a wedge-shape.

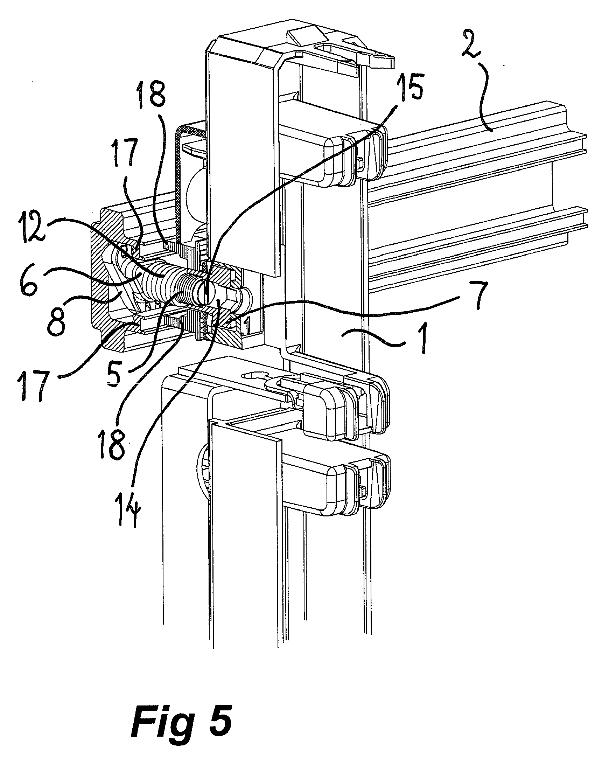

In Fig 5 it is shown how a connection assembly 5 according to the invention is used for the attachment of an electrical apparatus 1 to a bus bar 2. Electrical connection between the bus bar 2 and the electrical apparatus 1 is provided by contact flanges 17 of the bus bar 2 and contact members 18 of the electrical apparatus 1. The contact flanges 17 are normally an integrated part of the bus bar 2 and are also defining the slot 11 for entering the groove 10 of the bus bar 2. When an electrical apparatus 1 is attached to a bus bar 2 the contact members 18 are pressed against the outer sides of the contact flanges 17 of the bus bar 2 with a predetermined force. The connection assembly 5 provides this force by having the head 8 of the bolt 6 abutting the inner sides of the contact flanges 17, and the surface of the nut 7 facing the head 8 of the bolt 6 abutting the contact members 18, or parts in contact with the contact members 18, so as to press the contact flanges 17 and the contact members 18 towards each other when the connection assembly 5 is tightened.

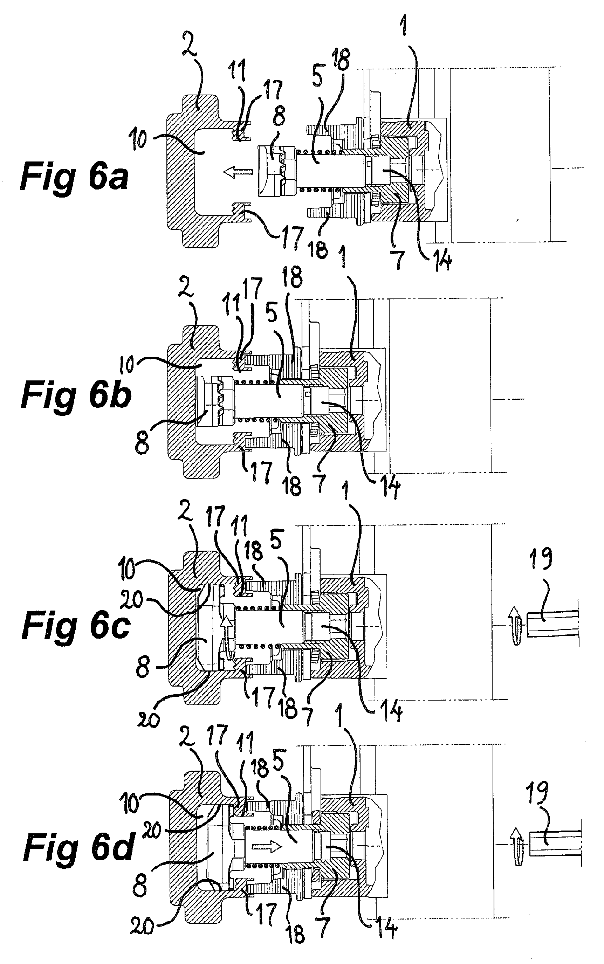

The use of a connection assembly 5 according to the invention for attaching an electrical apparatus 1 to a bus bar 2 is shown in Figs 6a-d.

In Fig 6a it is shown that the connection assembly 5 is premounted in the electrical apparatus 1 with the nut 7 abutting against the electrical apparatus 1. The head 8 of the bolt 6 is inserted into the groove 10 of the bus bar 2 through the slot 11 defined by the contact flanges 17 with the longitudinal axis of the head 8 extending along the slot 11.

In Fig 6b it is shown how the head 8 has been inserted into the groove 10 and that the contact flanges 17 of the bus bar 2 are abutting the contact members 18 of the electrical apparatus 1.

In Fig 6c it is shown how the head 8 of the bolt 6 of the connection assembly 5 is turned into its locking position. A tool 19 is used for engagement with and turning of the nut 7. Since there is frictional means, here in the form of a spring 12, provided between the nut 7 and the bolt 6, the bolt is turning with the nut 7 when said nut 7 is turned. The bolt 6 is turned with the nut 7 until parts of the short sides of the head come into engagement with opposite walls 20 in the groove 10. The nut 7 is turned in a direction which normally would screw the nut 7 onto the bolt 6, typically clock-wise, and the tool 19 is here depicted as an Allen key for engaging in a nut with a socket head, but if the nut has other engagement means the tool can of course be any tool suitable for turning the nut 7.

Upon further turning of the nut 7, using the tool 19, the bolt is prevented by said opposite walls 20 to turn with the nut 7. In Fig 6d it is shown how further turning of the nut 7 screws the nut 7 onto the bolt 6, whereby the bolt 6 is moving towards the nut 7, and hence moving towards the electrical apparatus 1. The head 8 of the bolt 6 abuts the contact flanges 17 from inside the groove 10 and since the nut 7 of the connection assembly 5 abuts the electric apparatus 1 so as to press the contact members 18 towards the bus bar 2, further turning of the nut 7 will press the contact flanges 17 and the contact members 18 towards each others. The turning can be continued until a predefined torque is reached, preferably between 1-30 Nm, most preferred 15 nm.

As can be seen in Fig 5 the turning of the bolt 6 can, during the attachment or after the attachment, be inspected by inspecting the indicator mark 15 through the through hole 14 of the nut 7. If the turning is not correct, the head 8 of the bolt 6 is not properly positioned inside the groove 10 of the bus bar 2. The connection assembly 5 can then be loosened somewhat and if the indicator mark 15 is a notch, a screw driver, preferably an insulated screw driver, can be used to turn the bolt 6, and thus the head 8 of the bolt 6 into a correct position. The screw driver is brought into engagement with the notch through the through hole 14 of the nut 7.

The invention is of course not in any way limited to the embodiments described above. On the contrary, several possibilities to modifications thereof should be apparent to a person skilled in the art without departing from the basic idea of the invention as defined in the appended claims.

## Claims

1. A connection assembly (5) for attaching an electrical apparatus (1) to a bus bar (2), the connection assembly (5) comprising a bolt (6) and a nut (7), the nut (7) being configured to push said electrical apparatus (1) towards the bus bar (2) when the connection assembly (5) is in use, wherein the bolt (6) has a head (8) and a shaft (9), which shaft (9) is provided with a thread (22) and configured to be screwed into the nut (7), the shaft (9) extending essentially from the centre of the head (8) of the bolt (6), wherein the head (8), as seen in a plane perpendicular to the longitudinal axis of the shaft (9), has an elongated shape so as to allow the head (8) to be introduced into a groove (10) in a bus bar (2) through a slot (11) with the longitudinal axis of the head (8) extending along the slot (11) and thereafter be rotated so as to come into engagement with opposite walls (20) in the groove (10), wherein frictional means is provided between the bolt (6) and the nut (7), the frictional means being configured to provide enough friction between the bolt (6) and the nut (7) for the bolt (6) to rotate with the nut (7) when the nut (7) is turned if the head (9) of the bolt (6) by the surroundings is allowed to rotate essentially freely, **characterized in that** the nut (7) has a through hole (14) and that the bolt (6) has an indicator mark (15) on the surface of the free end of the shaft (9), which indicator mark (15) indicates the turning position of the bolt (6), the indicator mark (15) being visible through said through hole (14) of the nut (7) when the thread (21) of the nut (7) is in engagement with the thread (22) of the shaft (9) of the bolt (6).

2. A connecting assembly (5) according to claim 1, **characterized in that** the frictional means comprises a spring (12), at one end abutting against the nut (7) on the side of the nut facing the head (9) of the bolt (6), and at the other end abutting against the head (9) of the bolt (6) on the side of the head (9) facing the nut (7), which spring (12) is a pressure spring configured to press the nut (7) and the bolt (6) in opposite directions so as to create friction between the thread (21) of the nut (7) and the thread (22) of the bolt (6).

3. A connecting assembly (5) according to claim 1 , **characterized in that** the frictional means comprises a plastic bushing (13) between the nut (7) and the bolt (6), which plastic bushing (13) is configured to engage with the thread (21) of the nut (7) and/or the thread (22) of the bolt (6).

4. A connection assembly (5) according to any of claims 1-3, **characterized in that** the indicator mark (15) is a notch.

5. A connection assembly (5) according to any of claims 1-4, **characterized in that** the nut (7) is a socket head nut provided with a socket hole, which together with the threaded hole of the nut (7) forms said through hole (14).

6. A connection assembly (5) according to any of the preceding claims, **characterized in that** the head (8) of the bolt (6) on the surface facing the nut (7), along the short sides of the head (8), has protrusions (16) for providing friction between the head (8) of the bolt (6) and the inside of the groove (10) in a bus bar (2) when the connection assembly (5) is in use.

7. Use of a connection assembly (5) according to any of claims 1-6 for attaching an electrical apparatus (1) to a bus bar (2).

8. A bus bar connection comprising a connection assembly (5) and a bus bar (2), wherein the bus bar (2) has a longitudinal groove (10) with a slot (11) configured for receiving the connection assembly (5), the slot (11) having a smaller width than the inner width of the groove (10), **characterized in that** the connection assembly (5) is the connection assembly (5) according to any of claims 1 -6.

9. Use of a bus bar connection according to claim 8, **characterized in that** the connection assembly (5) is connected to the bus bar (2) by:
a. inserting the head (8) of the bolt (6) into the groove (10) in the bus bar (2) through the slot (11) with the longitudinal axis of the head (8) extending along the slot (11),
b. turning the nut (7) in a direction which normally screws it onto the bolt (6), typically clock-wise, whereby the bolt (6) is turning with the nut (7) until parts of the short sides of the head (8) come into engagement with opposite walls (20) in the groove (10),
c. continuing to turn the nut (7) in the same direction as in b. until the connection assembly (5) is secured to the bus bar (2) with a predefined torque.

## Patentansprüche

1. Verbindungsanordnung (5) zum Befestigen eines elektrischen Betriebsmittels (1) an einer Sammelschiene (2), wobei die Verbindungsanordnung (5) einen Bolzen (6) und eine Mutter (7) umfasst, wobei die Mutter (7) ausgelegt ist, um das elektrische Betriebsmittel (1) in Richtung der Sammelschiene (2) zu schieben, wenn die Verbindungsanordnung (5) in Gebrauch ist, wobei der Bolzen (6) einen Kopf (8) und einen Schaft (9) aufweist, wobei der Schaft (9) mit einem Gewinde (22) versehen ist und ausgelegt ist, um in die Mutter (7) geschraubt zu werden, wobei der Schaft (9) sich im Wesentlichen vom Mittelpunkt des Kopfes (8) des Bolzens (6) erstreckt, wobei der Kopf (8) aus Sicht einer zur Längsachse des Schaftes (9) senkrechten Ebene eine längliche Form aufweist, um zu ermöglichen, dass der Kopf (8) durch einen Einschub (11) in eine Nut (10) in einer Sammelschiene (2) eingeführt werden kann, so dass sich die Längsachse des Kopfes (8) entlang des Einschubs (11) erstreckt, und anschließend rotiert werden kann, um mit einander gegenüberliegenden Wänden (20) in der Nut (10) in Berührungsschluss zu kommen, wobei ein Reibungsmittel zwischen dem Bolzen (6) und der Mutter (7) bereitgestellt wird, wobei das Reibungsmittel ausgelegt ist, um ausreichend Reibung zwischen dem Bolzen (6) und der Mutter (7) bereitzustellen, damit der Bolzen (6) mit der Mutter (7) rotiert, wenn die Mutter (7) gedreht wird, wenn dem Kopf (9) des Bolzens (6) durch die Umgebung ermöglicht wird, im Wesentlichen frei zu rotieren, **dadurch gekennzeichnet, dass** die Mutter (7) ein Durchgangsloch (14) aufweist und dass der Bolzen (6) eine Kennzeichnungsmarkierung (15) auf der Oberfläche des freiliegenden Endes des Schaftes (9) aufweist, wobei die Kennzeichnungsmarkierung (15) die Drehposition des Bolzens (6) anzeigt und die Kennzeichnungsmarkierung (15) durch das Durchgangsloch (14) der Mutter (7) sichtbar ist, wenn das Gewinde (21) der Mutter (7) mit dem Gewinde (22) des Schaftes (9) des Bolzens (6) in Berührungsschluss steht.

2. Verbindungsanordnung (5) nach dem Anspruch 1, **dadurch gekennzeichnet, dass** das Reibungsmittel eine Feder (12) umfasst, die an einem Ende auf der Seite der Mutter, die dem Kopf (9) des Bolzens (6) zugewandt ist, an der Mutter (7) anliegt und am anderen Ende auf der Seite des Kopfes (9), die der Mutter (7) zugewandt ist, am Kopf (9) des Bolzens (6) anliegt, wobei die Feder (12) eine Druckfeder ist, die ausgelegt ist, um die Mutter (7) und den Bolzen (6) in einander gegenüberliegende Richtungen zu drücken, um eine Reibung zwischen dem Gewinde (21) der Mutter (7) und dem Gewinde (22) des Bolzens (6) zu erzeugen.

3. Verbindungsanordnung (5) nach dem Anspruch 1, **dadurch gekennzeichnet, dass** das Reibungsmittel eine Kunststoffhülse (13) zwischen der Mutter (7) und dem Bolzen (6) umfasst, wobei die Kunststoffhülse (13) ausgelegt ist, um mit dem Gewinde (21) der Mutter (7) und/oder dem Gewinde (22) des Bolzens (6) in Berührungsschluss zu kommen.

4. Verbindungsanordnung (5) nach einem beliebigen der Ansprüche 1-3, **dadurch gekennzeichnet, dass** die Kennzeichnungsmarkierung (15) eine Kerbe ist.

5. Verbindungsanordnung (5) nach einem beliebigen der Ansprüche 1-4, **dadurch gekennzeichnet, dass** die Mutter (7) eine Innensechskantmutter ist, die mit einem Innensechskantloch versehen ist, das gemeinsam mit dem Gewindeloch der Mutter (7) das Durchgangsloch (14) bildet.

6. Verbindungsanordnung (5) nach einem beliebigen der vorstehenden Ansprüche, **dadurch gekennzeichnet, dass** der Kopf (8) des Bolzens (6) an der der Mutter (7) zugewandten Oberfläche entlang der kurzen Seiten des Kopfes (8) Vorsprünge (16) aufweist, um zwischen dem Kopf (8) des Bolzens (6) und dem Inneren der Nut (10) in einer Sammelschiene (2) Reibung bereitzustellen, wenn die Verbindungsanordnung (5) in Gebrauch ist.

7. Verwendung einer Verbindungsanordnung (5) nach einem beliebigen der Ansprüche 1-6 zum Befestigen eines elektrischen Betriebsmittels (1) an einer Sammelschiene (2).

8. Sammelschienenverbindung, die eine Verbindungsanordnung (5) und eine Sammelschiene (2) aufweist, wobei die Sammelschiene (2) eine längs gerichtete Nut (10) mit einem Einschub (11) aufweist, der ausgelegt ist, um die Verbindungsanordnung (5) aufzunehmen, wobei der Einschub (11) eine geringere Breite als die Innenbreite der Nut (10) aufweist, **dadurch gekennzeichnet, dass** die Verbindungsanordnung (5) die Verbindungsanordnung (5) nach einem beliebigen der Ansprüche 1 -6 ist.

9. Verwendung einer Sammelschienenverbindung nach dem Anspruch 8, **dadurch gekennzeichnet, dass** die Verbindungsanordnung (5) mit der Sammelschiene (2) folgendermaßen verbunden wird:
a. Einführen des Kopfes (8) des Bolzens (6) durch den Einschub (11) in die Nut (10) in der Sammelschiene (2), wobei sich die Längsachse des Kopfes (8) entlang des Einschubs (11) erstreckt,
b. Drehen der Mutter (7) in eine Richtung, die diese normalerweise auf den Bolzen (6) schraubt, üblicherweise im Uhrzeigersinn, wobei der Bolzen (6) sich mit der Mutter (7) dreht, bis Teile der kurzen Seiten des Kopfes (8) mit einander gegenüberliegenden Wänden (20) in der Nut (10) in Berührungsschluss kommen,
c. Fortsetzen des Drehens der Mutter (7) in derselben Richtung wie unter b., bis die Verbindungsanordnung (5) an der Sammelschiene (2) mit einem vorgegebenen Anzugsmoment gesichert ist.

## Revendications

1. Ensemble de raccordement (5) pour l'attachement d'un appareil électrique (1) à une barre omnibus (2), l'ensemble de raccordement (5) comprenant un boulon (6) et un écrou (7), l'écrou (7) étant configuré pour pousser ledit appareil électrique (1) vers la barre omnibus (2) lorsque l'ensemble de raccordement (5) est en utilisation, le boulon (6) ayant une tête (8) et une tige (9), laquelle tige (9) étant pourvue d'un filetage (22) et étant configurée pour être vissée dans l'écrou (7), la tige (9) s'étendant essentiellement à partir du centre de la tête (8) du boulon (6), laquelle tête (8), lorsqu'on la regarde dans un plan perpendiculaire à l'axe longitudinal de la tige (9), a une forme allongée de façon à permettre à la tête (8) d'être introduite dans une gorge (10) formée dans une barre omnibus (2) à travers une fente (11), avec l'axe longitudinal de la tête (8) s'étendant le long de la fente (11), et d'être ensuite tournée de façon à entrer en prise avec des parois opposées (20) de la rainure (10), des moyens de frottement étant prévus entre le boulon (6) et l'écrou (7), les moyens de frottement étant configurés pour créer un frottement suffisant entre le boulon (6) et l'écrou (7) pour le boulon (6) afin de tourner avec l'écrou (7) lorsque l'écrou (7) est tourné, si la tête (9) du boulon (6) est autorisée, par ce qui l'entoure, à tourner essentiellement librement, **caractérisé en ce que** l'écrou (7) a un trou débouchant (14) et **en ce que** le boulon (6) a une marque indicatrice (15) sur la surface de l'extrémité libre de la tige (9), laquelle marque indicatrice (15) indiquant la position en rotation du boulon (6), la marque indicatrice (15) étant visible à travers ledit trou débouchant (14) de l'écrou (7) lorsque le filetage (21) de l'écrou (7) est en prise avec le filetage (22) de l'arbre (9) du boulon (6).

2. Ensemble de raccordement (5) selon la revendication 1, **caractérisé en ce que** les moyens de frottement comprennent un ressort (12), à une extrémité butant contre l'écrou (7) sur le côté de l'écrou faisant face à la tête (9) du boulon (6), et à l'autre extrémité butant contre la tête (9) du boulon (6) sur le côté de la tête (9) faisant face à l'écrou (7), lequel ressort (12) est un ressort de pression configuré pour presser l'écrou (7) et le boulon (6) dans des directions opposées de façon à créer un frottement entre le filetage (21) de l'écrou (7) et le filetage (22) du boulon (6).

3. Ensemble de raccordement (5) selon la revendication 1, **caractérisé en ce que** les moyens de frottement comprennent une douille en plastique (13) entre l'écrou (7) et le boulon (6), laquelle douille en plastique (13) étant configurée pour entrer en prise avec le filetage (21) de l'écrou (7) et/ou le filetage (22) du boulon (6).

4. Ensemble de raccordement (5) selon l'une quelconque des revendications 1-3, **caractérisé en ce que** la marque indicatrice (15) est une encoche.

5. Ensemble de raccordement (5) selon l'une quelconque des revendications 1-4, **caractérisé en ce que** l'écrou (7) est un écrou à tête creuse pourvu d'un trou pour clé qui, en association avec le trou fileté de l'écrou (7), forme ledit trou débouchant (14).

6. Ensemble de raccordement (5) selon l'une quelconque des revendications précédentes, **caractérisé en ce que** la tête (8) du boulon (6) sur la surface faisant face à l'écrou (7), le long des côtés courts de la tête (8), a des saillies (16) pour créer un frottement entre la tête (8) du boulon (6) et l'intérieur de la gorge (10) formée dans une barre omnibus (2) lorsque l'ensemble de raccordement (5) est en utilisation.

7. Utilisation d'un ensemble de raccordement (5) selon l'une quelconque des revendications 1-6, pour l'attachement d'un appareil électrique (1) à une barre omnibus (2).

8. Raccordement à une barre omnibus comprenant un ensemble de raccordement (5) et une barre omnibus (2), dans laquelle la barre omnibus (2) a une gorge longitudinale (10) avec une fente (11) configurée pour recevoir l'ensemble de raccordement (5), la fente (11) ayant une largeur inférieure à la largeur interne de la gorge (10), **caractérisé en ce que** l'ensemble de raccordement (5) est l'ensemble de raccordement (5) selon l'une quelconque des revendications 1 à 6.

9. Utilisation d'un raccordement à une barre omnibus selon la revendication 8, **caractérisée en ce que** l'ensemble de raccordement (5) est raccordé à la barre omnibus (2) par :
a. insertion de la tête (8) du boulon (6) dans la gorge (10) formée dans la barre omnibus (2) à travers la fente (11), avec l'axe longitudinal de la tête (8) s'étendant le long de la fente (11),
b. rotation de l'écrou (7) dans un sens qui le visse normalement sur le boulon (6), typiquement dans le sens inverse des aiguilles d'une montre, moyennant quoi le boulon (6) tourne avec l'écrou (7) jusqu'à ce que des parties des côtés courts de la tête (8) entrent en prise avec des parois opposées (20) de la gorge (10),
c. continuation de rotation de l'écrou (7) dans le même sens qu'en b., jusqu'à ce que l'ensemble de raccordement (5) soit assujetti à la barre de bus (2) avec un couple prédéfini.
